# EUROPÄISCHE PATENTSCHRIFT

(11) **EP 1 820 076 B1**
(45) Veröffentlichungstag und Bekanntmachung des Hinweises auf die Patenterteilung: **22.10.2014**
(21) Anmeldenummer: 05814927.9
(22) Anmeldetag: 09.12.2005
(51) Int. Cl.: G05D 23/02

(54) **RÜCKLAUFTEMPERATURBEGRENZER**
RETURN TEMPERATURE LIMITER
LIMITEUR DE TEMPERATURE DE RETOUR

(30) Priorität: 11.12.2004 DE 102004059767
(43) Veröffentlichungstag der Anmeldung: 22.08.2007
(73) Patentinhaber: Danfoss A/S, 6430 Nordborg (DK)
(72) Erfinder: BJERGGAARD, Niels, DK-8370 Hadsten (DK)
(74) Vertreter: Knoblauch, Andreas
(86) Internationale Anmeldenummer: PCT/DK2005/000780
(87) Internationale Veröffentlichungsnummer: WO 2006/061023

(56) Entgegenhaltungen:
- FR-A1- 2 581 434
- US-A- 960 080
- US-A- 2 479 034
- US-A- 2 842 318
- PATENT ABSTRACTS OF JAPAN Bd. 008, Nr. 220 (M-330), 6. Oktober 1984 (1984-10-06) & JP 59 103084 A (NIHON THERMOSTAT KK), 14. Juni 1984 (1984-06-14)

## Beschreibung

Die Erfindung betrifft einen Rücklauftemperaturbegrenzer mit einem in einer Hauptrichtung verlaufenden Strömungspfad, in dem eine temperaturabhängig arbeitende Drosseleinrichtung angeordnet ist, die eine Feder aufweist, die einen Hüllkörper bildet, dessen Wand mindestens eine Lücke zwischen Federabschnitten aufweist, deren Größe veränderbar ist, wobei der Strömungspfad durch die Lücke hindurch verläuft und die Feder und ein Thermostatelement in einem Käfig angeordnet sind.

Rücklauftemperaturbegrenzer werden in Heizungsanlagen eingesetzt, um sicherzustellen, daß die einen Heizkörper verlassende Wärmeträgerflüssigkeit einen Maximalwert nicht überschreitet. Wenn die Temperatur der Flüssigkeit zu hoch ist, dann drosselt der Rücklauftemperaturbegrenzer, so daß die Wärmeträgerflüssigkeit über den Heizkörper (oder einen anderen Wärmetauscher, beispielsweise eine Fußbodenheizung) die Wärme an die Umgebung abgeben kann.

Ein Ventil mit den Merkmalen der eingangs genannten Art ist aus JP 59 10 3084 bekannt. Dort ist ein Durchflussbegrenzer offenbart, der eine temperaturabhängige Drosseleinrichtung aufweist, die in Form einer Feder ausgebildet ist. In einem Käfig ist ein Thermostatelement angeordnet, wobei das Thermostatelement wahrscheinlich mittels Presspassung in dem Käfig gehalten ist. Die Feder wird bei einer Längenänderung, insbesondere einer Vergrößerung des Thermostatelements, durch das Thermostatelement derart belastet, dass sie ausgedehnt wird. Im unbelasteten Zustand der Feder liegen deren Windungen aneinander an und verschließen so einen möglichen Strömungspfad durch die Lücke zwischen den Federwindungen.

Aus DE 101 32 001 A1 ist ein thermostatischer Regler bekannt, der eine in einem Rohrabschnitt angeordnete Hülse aufweist, in der ein Ventilelement gegen die Kraft einer Feder bewegbar angeordnet ist. Das Ventilelement wird von einem Thermostatelement beaufschlagt, das ebenfalls in der Hülse angeordnet ist. Das Thermostatelement weist eine Dehnstoffüllung auf. Die Rückstellfeder umgibt einen Schaft des Ventilelements konzentrisch. Durch die Bewegung des Ventilelements wird ein Durchtrittsquerschnitt zwischen dem Ventilelement und einer Ringblende mehr oder weniger freigegeben.

US 5 104 038 zeigt eine weitere thermostatische Vorrichtung, bei der ein Ventilelement mit einem Ventilsitz zusammenwirkt, wobei der Ventilsitz an einem Ventilsitzgehäuse angeordnet ist, das sich in einem Rohrabschnitt befindet. Das Ventilelement wird durch eine Schraubenfeder beaufschlagt, deren Hüllkörper einen Zylinder bildet. Die Feder ist dabei aus einem Bimetall gebildet, so dass sie ihre Längenausdehnung in Abhängigkeit von der Temperatur ändert.

In beiden Fällen benötigt man relativ viele Einzelteile. In der Regel ist ein Ventilelement und ein Ventilsitz erforderlich, auch wenn das Ventilelement mit dem Ventilsitz nur eine Drosselung, nicht jedoch einen vollständigen Verschluss des freien Strömungsquerschnitts bewirkt.

FR 2 581 434 A1 zeigt ein Thermostatventil mit einem in einem Rohr verlaufenden Strömungspfad, in dem ein Thermostatelement angeordnet ist, das in einem Käfig aufgenommen ist. Der Käfig bildet einen Ventilsitz, mit dem ein Ventilelement zusammenwirkt. Das Ventilelement wird von einer in dem Käfig angeordneten Feder einerseits und vom Thermostatelement andererseits belastet. Die Feder drückt gleichzeitig das Thermostatelement in einen am Käfig ausgebildeten Ring.

Der Erfindung liegt die Aufgabe zugrunde, den Aufbau eines Rücklauftemperaturbegrenzers einfach zu gestalten.

Diese Aufgabe wird bei einem Rücklauftemperatur-begrenzer der eingangs genannten Art dadurch gelöst, dass das Thermostatelement durch die Feder gegen eine Haltefläche des Käfigs gedrückt ist und der Käfig Öffnungen in einem Bereich aufweist, der die Feder umgibt, wobei das Thermostatelement die Feder bei einer höheren Temperatur stärker komprimiert, wobei bei niedrigen Temperaturen der Dresselwiderstand des Rücklauftemperaturbegrenzers sinkt.

Mit dieser Ausgestaltung trägt man der Tatsache Rechnung, dass ein Rücklauftemperaturbegrenzer den Strömungspfad in der Regel nicht vollständig verschließen soll. Man möchte auch bei einer gedrosselten Strömung noch einen gewissen Durchfluss zulassen. Dementsprechend reicht es aus, Maßnahmen vorzusehen, die die Drosselung bewirken. Eine Anlage eines Ventilelements an einem Ventilsitz ist daher nicht erforderlich. Man kann die Drosselung dadurch bewirken, dass man den oder die Abstände zwischen einzelnen Abschnitten der Feder verkleinert. Die Drosselung wird verringert, wenn man diese Abstände oder Lücken vergrößert. Man benötigt also im Grunde nur noch die Feder als Ersatz für Ventilelement plus Ventilsitz, so dass der Aufbau des Rücklauftemperaturbegrenzers in erheblichem Maße vereinfacht wird. Das Thermostatelement ist durch die Feder gegen eine Haltefläche des Käfigs gedrückt. Die Feder stützt sich hierbei an einer Gegenfläche ab. Man benötigt also keine zusätzlichen Elemente, um das Thermostatelement im Käfig festzuhalten. Diese Aufgabe wird vielmehr zusätzlich von der Feder übernommen.

Vorzugsweise weist die Feder mehrere Windungen auf und die Lücke ist zwischen den Windungen angeordnet. Es handelt sich also um eine Schraubendruckfeder. Wenn die Feder komprimiert wird, dann nähern sich die Windungen aneinander an. Dies kann im Extremfall bis zur Anlage der Windungen aneinander führen. In diesem Fall ist der Strömungspfad nahezu geschlossen, wenngleich man in der Praxis einen dichten Abschluß nicht erreichen wird, so dass nach wie vor ein gewisser Flüssigkeitsdurchsatz möglich ist. Wenn sich die Feder entspannt oder auseinandergezogen wird, dann werden die Lücken zwischen den Windungen entsprechend größer, so dass der Drosselwiderstand herabgesetzt wird.

Vorzugsweise sind die Windungen rechtwinklig zur Haupt-richtung gestaffelt. Die Feder ändert also ihren Querschnitt entlang der Hauptrichtung. Dies hat den Vorteil, dass der Strömungspfad in geringerem Maße radial nach außen oder nach innen umgelenkt werden muß. Hierbei ist besonders bevorzugt, dass der Hüllkörper als Konusabschnitt ausgebildet ist. Eine Feder, die konusartig gewickelt ist, läßt sich relativ einfach herstellen.

Bevorzugterweise überlappen sich die Windungen quer zur Hauptrichtung zumindest teilweise. Dies erleichtert es, die Lücken zwischen den Windungen so klein zu machen, dass eine nennenswerte Drosselung erreicht wird.

Vorzugsweise ist der Käfig in einem Rohrabschnitt befestigt. Man kann also den Rücklauftemperaturbegrenzer vorfertigen, nämlich die Feder, das Thermostat-element und den Käfig zusammensetzen und den Käfig dann in dem Rohrabschnitt befestigen. Dies erleichtert die Montage und gestattet eine sehr preisgünstige Fertigung des Rücklauftemperaturbegrenzers.

Vorzugsweise ist der Käfig in den Rohrabschnitt eingepresst. Dies ist eine relativ einfache Befestigungsmöglichkeit, die kostengünstig zu realisieren ist.

Auch ist von Vorteil, wenn das Thermostatelement über eine Druckscheibe mit der Feder in Verbindung steht. Die Druckscheibe hat dann zwei Aufgaben. Zum einen erleichtert sie den Kraftangriff des Thermostatelements an der Feder. Zum anderen dient sie auch als "Ver-schluß", d.h. sie vermindert den zur Verfügung stehenden Strömungsquerschnitt auf nahezu Null, wenn die Feder vollständig komprimiert ist.

Bevorzugterweise ragt das Thermostatelement mit einem Fortsatz aus dem Käfig heraus. Der Käfig an sich kann also relativ klein bleiben. Der aus dem Käfig herausragende Fortsatz kann dann mit der umgebenden Flüssigkeit in ausreichendem Maße in Kontakt stehen, so dass eine zufriedenstellende Regelung der Rücklauf temperatur erreicht wird.

Bevorzugterweise ist der Käfig aus Kunststoff gebildet. Der Käfig läßt sich also vergleichsweise preisgünstig herstellen, beispielsweise durch Spritzgießen.

Auch ist von Vorteil, wenn das Thermostatelement als Wachspatrone ausgebildet ist. Eine Wachspatrone hat eine ausreichend steile Kennlinie, um eine Rücklauftemperaturregelung auch bei kleiner Baugröße des Thermostat-elements zu bewirken.

Die Erfindung wird im folgenden anhand eines bevorzugten Ausführungsbeispiels in Verbindung mit der Zeichnung beschrieben. Hierin zeigen:
- Fig. 1: eine Schnittansicht durch einen Rücklauftemperaturbegrenzer,
- Fig. 2: eine Seitenansicht des Rücklauftemperaturbegrenzers und
- Fig. 3: eine perspektivische Darstellung des Rücklauftemperaturbegrenzers.

Ein Rücklauftemperaturbegrenzer 1 ist als Einheit 2 ausgebildet, die in einen Rohrabschnitt 3 eingesetzt ist. Der Rohrabschnitt 3 wird in Richtung eines Pfeiles 4 von einer Wärmeträgerflüssigkeit durchströmt, beispielsweise von heißem Wasser, das von einem Heizkörper zu einer Wärmequelle zurückfließt.

Die Einheit 2 weist einen Käfig 5 auf, der beispielsweise als Spritzgußteil aus Kunststoff ausgebildet ist. Der Käfig 5 ist in den Rohrabschnitt 3 eingepreßt oder eingeklebt. Wenn der Käfig 5 aus Metall, z.B. Messing, gebildet ist, kann er auch durch Schweißen, Punktschweißen, Löten oder dergleichen im Rohrabschnitt 3 befestigt werden.

Der Käfig 5 weist mehrere Finger 6 auf, die konisch nach innen geneigt sind. Jeder Finger 6 hat an seinem in Hauptrichtung 4 vorderen Ende eine radial nach innen gerichtete Nase 7, die an ihrem in Hauptrichtung 4 hinteen Ende eine Haltefläche 8 bildet. Am gegenüberliegenden Ende weist der Käfig 5 einen Ring 9 auf, an dem die Finger 6 befestigt sind. Dieser Ring weist an seinem in Hauptrichtung 4 hinteren Ende einen radial nach innen gerichteten Flansch 10 auf, der an seiner Vorderseite eine Stützfläche 11 bildet.

An der Stützfläche 11 stützt sich eine Feder 12 ab, die als konische Schraubendruckfeder ausgebildet ist. An der dem Flansch 10 gegenüberliegenden Seite der Feder ist eine Druckscheibe 13 angeordnet, an der sich ein Thermostatelement 14 mit einem Stößel 15 abstützt. Das Thermostatelement 14 seinerseits ist durch die Feder 12 an die Haltefläche 8 der Finger 6 gedrückt und damit im Käfig 5 festgehalten.

Die Feder 12 weist mehrere Windungen 16 auf, zwischen denen Lücken 17 gebildet sind. Je weiter sich die Feder entspannt, desto größer werden die Lücken 17. Je stärker die Feder 12 zusammengedrückt wird, desto kleiner werden die Lücken 17.

Wenn der Rohrabschnitt 3 in geeigneter Weise ausgebildet ist, dann können der Rohrabschnitt 3 und der Käfig 5 einteilig ausgebildet sein.

Die Feder 12 hat, wie oben erwähnt, eine konische Form, d.h. die Feder 12 bildet einen Hüllkörper, der die Form eines Konusabschnitts hat. Dies bedeutet, dass die einzelnen Windungen 16 sowohl in Hauptrichtung 4 als auch rechtwinklig, also senkrecht zur Hauptrichtung 4 versetzt zueinander angeordnet sind. Wenn die Feder 12 vollständig komprimiert ist, dann liegen die einzelnen Windungen praktisch aneinander an. In diesem Zustand ist der Durchgang durch die Feder 12 in Hauptrichtung zwar nicht vollständig verschlossen, die Feder 12 bildet aber eine Drossel mit einer sehr merkbaren Drosselwirkung. Wenn die Feder 12 weiter auseinandergezogen ist, dann sinkt diese Drosselwirkung.

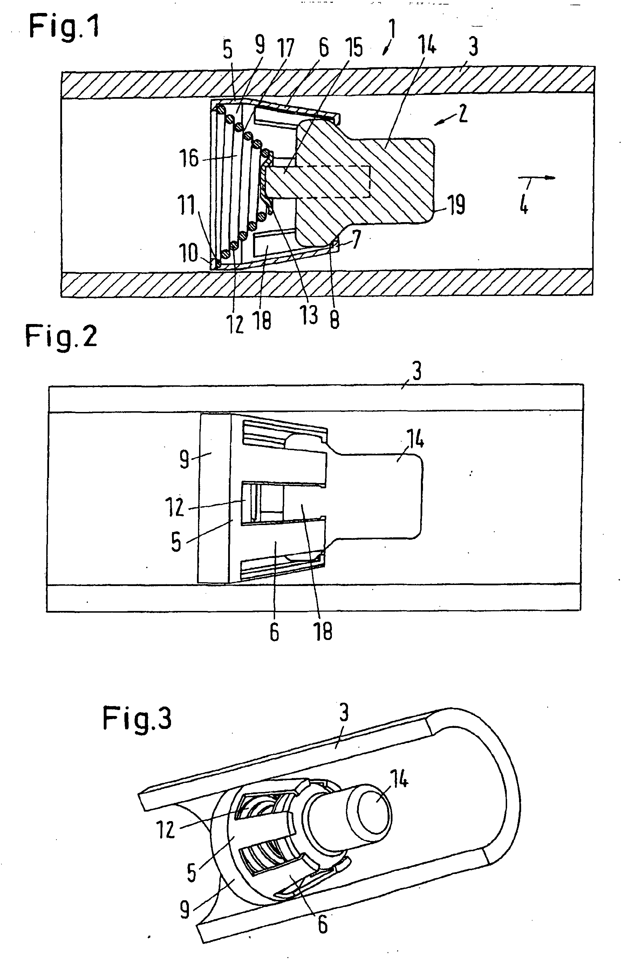

Der Käfig weist Öffnungen 18 auf. Heizungsflüssigkeit, die in Hauptrichtung 4 strömt, gelangt also (bezogen auf Fig. 1) in das linke Ende des Käfigs 5 und damit in das linke Ende der Feder 12, durchströmt dann die Lücken 17 zwischen den Windungen 16 und die Öffnungen 18 des Käfigs 5, die zwischen den Fingern 6 ausgebildet sind, und strömt dann weiter am Thermostatelement 14 vorbei.

Das Thermostatelement 14 ist beispielsweise als Wachs-patrone ausgebildet. Es kann jedoch auch andere Dehnstoffe enthalten. Je höher die Temperatur ist, desto weiter wird der Stößel 15 aus dem Thermostatelement 14 verdrängt und komprimiert dabei die Feder 12. Der Kraftangriff erfolgt dabei über die Druckscheibe 13, die neben der Aufgabe, die Kraft vom Stößel 15 auf die Feder 12 zu übertragen, zusätzlich die Aufgabe erfüllt, in der Spitze der Feder 12 einen freien Durchgang zu blockieren. Die Druckscheibe 13 ist entbehrlich, wenn man beispielsweise die mit der Feder 12 zusammenwirkende Stirnseite des Stößels 15 entsprechend verbreitert oder die Feder 12 an ihrem rechten Ende (bezogen auf die Darstellung der Fig. 1) mit einem kleineren Durchmesser versieht.

Bei Verwendung einer Wachspatrone als Thermostatelement 14 benötigt man ohnehin eine Feder 12, um das Thermostatelement bei Absinken der Temperatur wieder zu verkürzen. Die Feder 12 hat also im vorliegenden Fall zwei Aufgaben, nämlich die Rückstellung und die Drosselung.

Das Thermostatelement 14 ist nicht vollständig im Käfig 5 aufgenommen. Vielmehr ragt ein Fortsatz 19 aus dem Käfig 5 heraus, so daß man einerseits den Käfig 5 nicht übermäßig groß machen muß, andererseits aber eine ausreichende Fläche des Thermostatelements 14 zur Verfügung stellen kann, über die das Thermostatelement 14 Wärme mit der umgebenden Heizungsflüssigkeit austauschen kann.

Die Einheit 2 funktioniert auch, wenn die Durchströmung durch den Rohrabschnitt 3 entgegen der Hauptrichtung 4 erfolgt. Wenn die Strömung in Hauptrichtung 4 erfolgt, dann wird die Feder 12 radial von innen nach außen durchströmt (mit einer axialen Komponente). Wenn die Durchströmung in die umgekehrte Richtung erfolgt, dann wird die Feder 12 radial von außen nach innen durchströmt.

Der Rücklauftemperaturbegrenzer 1 ist sehr einfach und damit sehr kostengünstig aufgebaut. Im Grunde reicht es aus, ihn aus nur drei Elementen zu bilden, nämlich dem Käfig 5, der Feder 12 und dem Thermostatelement 4. Im Extremfall kann man noch ein viertes Element hinzufügen, nämlich die Druckscheibe 13.

Sämtliche Elemente der Einheit 2 halten ohne zusätzliches Befestigungsmaterial zusammen. Der Zusammenhalt der einzelnen Teile wird durch das Zusammenwirken der Feder 12 mit dem Käfig 5 gewährleistet.

## Patentansprüche

1. Rücklauftemperaturbegrenzer (1) mit einem in einer Hauptrichtung verlaufenden Strömungspfad, in dem eine temperaturabhängig arbeitende Drosseleinrichtung angeordnet ist, die eine Feder (12) aufweist, die einen Hüllkörper bildet, dessen Wand mindestens eine Lücke (17) zwischen Federabschnitten aufweist, deren Größe veränderbar ist, wobei der Strömungspfad durch die Lücke (17) hindurch verläuft und die Feder (12) und ein Thermostatelement (14) in einem Käfig (5) angeordnet sind, wobei das Thermostatelement (14) durch die Feder (12) gegen eine Haltefläche (8) des Käfigs (5) gedrückt ist und der Käfig (5) Öffnungen (18) in einem Bereich aufweist, der die Feder (12) umgibt, wobei das Thermostatelement (14) die Feder (12) bei einer höheren Temperatur stärker komprimiert, wobei bei niedrigen Temperaturen der Drosselwiderstand des Rücklauftemperaturbegrenzers (1) sinkt.

2. Rücklauftemperaturbegrenzer nach Anspruch 1, **dadurch gekennzeichnet, dass** die Feder (12) mehrere Windungen (16) aufweist und die Lücke (17) zwischen den Windungen (16) angeordnet ist.

3. Rücklauftemperaturbegrenzer nach Anspruch 2, **dadurch gekennzeichnet, dass** die Windungen (16) rechtwinklig zur Hauptrichtung (4) gestaffelt sind.

4. Rücklauftemperaturbegrenzer nach einem der Ansprüche 1 bis 3, **dadurch gekennzeichnet, dass** der Hüllkörper als Konusabschnitt ausgebildet ist.

5. Rücklauftemperaturbegrenzer nach Anspruch 4, **dadurch gekennzeichnet, dass** sich die Windungen (16) quer zur Hauptrichtung (4) zumindest teilweise überlappen.

6. Rücklauftemperaturbegrenzer nach einem der Ansprüche 1 bis 5, **dadurch gekennzeichnet, dass** der Käfig (5) in einem Rohrabschnitt (3) befestigt ist.

7. Rücklauftemperaturbegrenzer nach Anspruch 6, **dadurch gekennzeichnet, dass** der Käfig (5) in den Rohrabschnitt (3) eingepresst ist.

8. Rücklauftemperaturbegrenzer nach einem der Ansprüche 1 bis 7, **dadurch gekennzeichnet, dass** das Thermostatelement (14) über eine Druckscheibe (13) mit der Feder (12) in Verbindung steht.

9. Rücklauftemperaturbegrenzer nach einem der Ansprüche1 bis 8, **dadurch gekennzeichnet, dass** das Thermostatelement (14) mit einem Fortsatz (19) aus dem Käfig (5) herausragt.

10. Rücklauftemperaturbegrenzer nach einem der Ansprüche 1 bis 9, **dadurch gekennzeichnet, dass** der Käfig (5) aus Kunststoff gebildet ist.

11. Rücklauftemperaturbegrenzer nach einem der Ansprüche 1 bis 10, **dadurch gekennzeichnet, dass** das Thermostatelement (14) als Wachspatrone ausgebildet ist.

## Claims

1. Return temperature limiter (1) having a flow path which runs in a main direction and in which there is arranged a throttle device which operates on a temperature-dependent basis, which throttle device has a spring (12) which forms an enveloping body whose wall has at least one gap (17) between spring sections, the size of which gap can be varied, wherein the flow path runs through the gap (17) and the spring (12) and a thermostat element (14) are arranged in a cage (5), wherein the thermostat element (14) is pressed by the spring (12) against a retention surface (8) of the cage (5) and the cage (5) has openings (18) in a region surrounding the spring (12), wherein the thermostat element (14) compresses the spring (12) with greater intensity at a higher temperature, wherein the throttling resistance of the return temperature limiter (1) falls at low temperatures.

2. Return temperature limiter according to Claim 1, **characterized in that** the spring (12) has multiple windings (16) and the gap (17) is arranged between the windings (16).

3. Return temperature limiter according to Claim 2, **characterized in that** the windings (16) are staggered at right angles to the main direction (4).

4. Return temperature limiter according to one of Claims 1 to 3, **characterized in that** the enveloping body is in the form of a conical section.

5. Return temperature limiter according to Claim 4, **characterized in that** the windings (16) at least partially overlap transversely with respect to the main direction (4).

6. Return temperature limiter according to one of Claims 1 to 5, **characterized in that** the cage (5) is fastened in a pipe section (3).

7. Return temperature limiter according to Claim 6, **characterized in that** the cage (5) is pressed into the pipe section (3).

8. Return temperature limiter according to one of Claims 1 to 7, **characterized in that** the thermostat element (14) is connected to the spring (12) via a thrust washer (13).

9. Return temperature limiter according to one of Claims 1 to 8, **characterized in that** the thermostat element (14) projects, by way of a projection (19), out of the cage (5).

10. Return temperature limiter according to one of Claims 1 to 9, **characterized in that** the cage (5) is formed from plastic.

11. Return temperature limiter according to one of Claims 1 to 10, **characterized in that** the thermostat element (14) is in the form of a wax cartridge.

## Revendications

1. Limiteur de température de retour (1) comprenant une voie d'écoulement s'étendant dans une direction principale, dans laquelle voie d'écoulement est disposé un dispositif d'étranglement travaillant en fonction de la température, lequel comprend un ressort (12) qui forme un corps d'enveloppe dont la paroi comprend au moins un interstice (17) entre des portions de ressort, dont la taille peut être modifiée, la voie d'écoulement s'étendant à travers l'interstice (17) et le ressort (12) et un élément thermostatique (14) étant disposés dans une cage (5), l'élément thermostatique (14) étant pressé par le ressort (12) contre une surface de retenue (8) de la cage (5) et la cage (5) comprenant des ouvertures (18) dans une région qui entoure le ressort (12), l'élément thermostatique (14) comprimant plus fortement le ressort (12) en cas de température plus élevée, la résistance d'étranglement du limiteur de température de retour (1) diminuant en cas de basses températures.

2. Limiteur de température de retour selon la revendication 1, **caractérisé en ce que** le ressort (12) comprend plusieurs spires (16) et l'interstice (17) est situé entre les spires (16).

3. Limiteur de température de retour selon la revendication 2, **caractérisé en ce que** les spires (16) sont échelonnées perpendiculairement à la direction principale (4).

4. Limiteur de température de retour selon l'une quelconque des revendications 1 à 3, **caractérisé en ce que** le corps d'enveloppe est réalisé sous la forme d'une portion conique.

5. Limiteur de température de retour selon la revendication 4, **caractérisé en ce que** les spires (16) se chevauchent au moins partiellement transversalement à la direction principale (4).

6. Limiteur de température de retour selon l'une quelconque des revendications 1 à 5, **caractérisé en ce que** la cage (5) est fixée dans une portion tubulaire (3).

7. Limiteur de température de retour selon la revendication 6, **caractérisé en ce que** la cage (5) est enfoncée dans la portion tubulaire (3).

8. Limiteur de température de retour selon l'une quelconque des revendications 1 à 7, **caractérisé en ce que** l'élément thermostatique (14) est en liaison avec le ressort (12) par le biais d'un disque de butée (13).

9. Limiteur de température de retour selon l'une quelconque des revendications 1 à 8, **caractérisé en ce que** l'élément thermostatique (14) fait saillie, par une saillie (19), hors de la cage (5).

10. Limiteur de température de retour selon l'une quelconque des revendications 1 à 9, **caractérisé en ce que** la cage (5) est formée à partir de plastique.

11. Limiteur de température de retour selon l'une quelconque des revendications 1 à 10, **caractérisé en ce que** l'élément thermostatique (14) est réalisé en tant que cartouche de cire.
